# EUROPEAN PATENT SPECIFICATION

(11) **EP 3 229 613 B1**
(45) Date of publication and mention of the grant of the patent: **03.06.2026**
(21) Application number: 15805519.4
(22) Date of filing: 08.12.2015
(51) Int. Cl.: A23L 33/16, C02F 1/68

(54) **ZINC ENRICHED DRINKING WATER COMPOSITION AND RELATED PACKAGED DRINKING WATER COMPOSITION**
MIT ZINK ANGEREICHERTE TRINKWASSERZUSAMMENSETZUNG UND ZUGEHÖRIGE VERPACKTE TRINKWASSERZUSAMMENSETZUNG
COMPOSITION D'EAU POTABLE ENRICHIE EN ZINC ET COMPOSITION D'EAU POTABLE EMBALLÉE ASSOCIÉE

(30) Priority: 09.12.2014 EP 14196917
(43) Date of publication of application: 18.10.2017
(73) Proprietor: Société des Produits Nestlé S.A., 1800 Vevey (CH)
(72) Inventor: MARCHAL, Eric, 88800 Vittel (FR); BONNIER, Sylvain, 88800 Vittel (FR); SUBLET, Renaud, 88800 Vittel (FR)
(74) Representative: Zingle, Catherine
(86) International application number: PCT/EP2015/079029
(87) International publication number: WO 2016/091908

(56) References cited:
- WO-A1-2013/127754
- WO-A1-2014/095375
- JP-A- 2008 182 948
- US-A1- 2003 049 352
- US-A1- 2005 123 651
- "New Nestlé Mineral Water with Zinc Protection in Pakistan", INTERNET CITATION, 15 July 2012 (2012-07-15), pages 1, XP002697544, Retrieved from the Internet <URL:http://www.pakreviews.com/nestle-pure-life-promotions-2012> [retrieved on 20130522]
- MIKE STONES: "Nestle launches lightweight PET bottle", FOOD PRODUCTION DAILY, 9 December 2009 (2009-12-09), XP002740161, Retrieved from the Internet <URL:http://www.foodproductiondaily.com/Packaging/Nestle-launches-lightweight-PET-bottle> [retrieved on 20150527]

## Description

### Field of the Invention

The invention relates to a packaged zinc enriched drinking water composition.

### Background

Today it is usual to add minerals in water to be bottled for human consumption in order to provide minerals enriched water to consumers.

Usually, bottled waters are enriched in various minerals and ingredients: calcium, magnesium, bicarbonates, sodium, sulfate ...etc., according to the nutritional and taste properties that we want the water to have.

It is known to add different ingredients in a water to be bottled, but as of today there is very few zinc enriched drinking water on the market.

The currents zinc enriched beverages are usually not considered as water as they contain sugar, sweeteners and / or acidifiers.

Zinc is an essential trace element for human being and has an important role in the organism, especially because it activates given enzymes. In particular, zinc operates in:
- Protein synthesis and thus in growth, in cells regeneration, in reproduction, in fertility, in healing, in peel aspect and in immunity;
- Hormone synthesis of whom insulin and use of carbohydrates, flavors assessment and color vision.

Generally zinc is found in small amount in a number of foods (oysters, meats, entrails, whole bread, eggs, fishes, dried vegetables) but poor manifold feedings can lead to zinc deficiency.

The Daily Recommended Intake (DRI) is about a 10 to 15 mg but varies depending on age and sex: child (5 to 8 mg/d), teenager (10 mg/d), woman (8 mg/d) and man (11 mg/d).

A zinc deficiency can lead to late growth, late sexual maturing, peel and flavor troubles, hair loss, late healing, and immunity troubles. During pregnancy, which is a critical period, zinc deficiency can lead to a risk of malformation of the fetus.

The World Health Organization has revealed a certain number of countries in which some high zinc deficiencies have been identified, especially for children and pregnant women. Among them, we can mention India, Pakistan or Nigeria.

A zinc fortification is then to be considered in these countries. This fortification can be done by adding zinc in human food products. However, for practical and economic reasons it is preferable to add zinc in beverages and especially in drinking water for human consumption.

However, zinc stability in water is quite difficult to obtain as it is multi-parameters dependent and zinc sedimentation generally occurs before a 12 months shelf-life. For example, during shelf-life of the bottled water, zinc stability will depend on water pH, ambient temperature, bicarbonates concentration, thickness and volume of the bottle (usually plastic PET bottle).

Hence, in some waters reaching specific pH characteristics, for example pH over 7.5, zinc will combine with alkaline ions to lead to insoluble hydroxides (Zn(OH)₂) or carbonates (ZnCO₃). This insoluble component will lead to non-homogeneity of zinc concentration in water and to the presence of unpleasant sediment in the water.

Furthermore, in commonly used plastic bottle made, for example, of PET, once precipitated in insoluble zinc hydroxide, zinc will interact with the plastic walls of the bottle and will stick to the walls. It is then not possible for the person drinking said water to absorb zinc and the desired fortification effect will not occur.

In order to avoid the bottled water reaching such pH during shelf life, a proposed solution is to acidify a water matrix (before addition of zinc) using strong acid (sulfuric acid for example) in order to get a final water product having a pH lower than 6.5 to 7 thereby avoiding increase of pH until 7.5 during shelf-life. However, using additional acid presents some limitations as in some countries such waters having a pH lower than 6.5 are not authorized by regulatory authorities/considered as water products.

To be more explicit, in current zinc enriched water composition, during shelf-life, the water pH increases with time due to dissolved carbon dioxide losses via the bottle walls coupled with the presence of bicarbonates (inherently in the water matrix).

The chemical equilibrium reaction is the following

HCO₃⁻ + H⁺ + H₂O + CO₂

Hence, when dissolved carbon dioxide outgasses through the bottle walls, the hydrogen ions concentration declines which has the effect of increasing the pH.

For water stored in conventional PET bottles, concentration of minerals and salts, including zinc, in the water matrix can be optimized to reach the requested equilibrium.

Conventional PET bottles are nowadays defined as bottles having a PET weight of 15g for 0.6 I and 29g for 1.5 l.

However, when the bottle is a PET lightweight bottle, the outgassing of the dissolved carbon dioxide is increased due to bottle walls being thinner and then pH increases faster leading to zinc precipitation when pH reaches 7.5: pH increase is accelerated by using lightweight bottle leading to quicker sedimentation of zinc in the zinc enriched water.

Lightweight bottle should be understood as a bottle having reduced PET weight in comparison to conventional PET bottle. The PET weight reduction is at least 5 %. For example, a PET lightweight bottle has a PET weight of 13g for 0.6 l and 27g for 1.5l.

In WO 2013/127754 A1 (NESTEC S.A.), a production process is described for a zinc enriched drinking water, which, starting from a water matrix comprising drinking water, comprises, a first step of: - Measuring the pH of the water matrix (step A), and then, in one order or the other, the steps of: - Acidifying the water matrix (step B) in order to get a final water product having a pH lower than 7, and - Adding zinc (step C) in a concentration comprised between 0,8 mg/l et 5mg/l, so that sedimentation of zinc in the final water product is lower than 10% of soluble zinc over a period of 12 months at a maximum temperature of 40°C. A zinc enriched drinking water composition and packaged zinc enriched drinking water is also described.

In "New Nestlé Mineral Water with Zinc Protection in Pakistan", 15 July 2012 (2012-07-15), page 1, XP002697544, retrieved from the Internet: URL:http://www.pakreviews.com/nestle-pure-life-promotions-2012, the launch of a mineral water comprising zinc is described. The amounts of the minerals in the water is not disclosed, nor is the packaging for the mineral water.

In WO 2014/095375 A1 (NESTEC S.A.), a method of improving the solubility of zinc in a zinc-containing still drinking water is described. The method comprises a carbonating step of carbonating the still drinking water with a low carbon dioxide concentration.

In US 2005/123651 A1 (HAHN YOUNG-HO; SHAN YIN J), a mineral water composition which contains Sengmin Donglisu comprising various kinds of minerals, zinc hydrates and magnesium hydrates is described. The mineral water is reported to have therapeutic and cosmetic effects on the human body.

In US 2003/049352 A1 (MEHANSHO HAILE et al.), a drinking water composition fortified with minerals and/or vitamins, including iron and zinc, is described and reported to have clarity, color and flavor improvements. The drinking water contains at least 5 ppm of a bioavailable iron compound which is reported to be stable to oxidation in the drinking water composition, without the need for excessive amounts of reducing agents or for fruit and/or botanical flavors and colorants to mask the metal taste or after-taste of the iron. A method is also disclosed for fortifying the drinking water with certain bioavailable zinc and iron compounds, reportedly without producing undesirable clarity, color or metal taste or after-taste.

In JP 2008 182948 A (GOSHU YAKUHIN KK), a zinc-containing drink is described, which is obtained by including in drinking water (excluding distilled water), zinc gluconate and an edible acid substance, such as citric acid, which is adjusted in pH to 6.5-2.0 and is reported to hinder production of precipitate. The precipitate is reported to be likely caused by reaction of zinc ions and an inorganic compound contained in the drinking water.

It is necessary to propose a solution allowing having zinc enriched drinking water with increased zinc soluble form stability and compatible with usual conditions and time of storage and commercialization of packaged water. In addition to the preceding, the water should have improved and appreciated taste.

### Summary of the Invention

In this respects, the invention provides a packaged zinc enriched drinking water composition according to Claim 1.

The specified ranges of minerals allows to have a zinc enriched drinking water composition compatible with consumer expectations in term of taste.

Advantageously, the drinking water of the water matrix comprises partially or totally demineralized drinking water. This makes it possible to better control the level of bicarbonates in the water matrix.

More particularly, pH of the water matrix at the time it is prepared is between 6.5 and 7. This characteristic allows delaying pH increase in time.

According to an optional further feature, pH of the water matrix is partially adjusted by acidifying the water matrix. Acidifying the water matrix is made by adding a strong acid to the water matrix.

The above presented features allow pH of the zinc enriched drinking water composition to have limited increase during 12 months after preparation so that pH does not exceed 7.5 after 12 months from preparation thereby limiting precipitation of zinc in the zinc enriched drinking water composition.

The invention relates to a packaged zinc enriched drinking water composition. Said packaged zinc enriched drinking water comprising:
a) A zinc enriched drinking water composition based on a water matrix comprising drinking water and the following set of minerals:
   - calcium in a range from 60 to 90 mg/l;
   - magnesium in a range from 23 to 34 mg/l;
   - zinc in a range from 2 to 12 mg/l; and
   - sodium in a range from 60 to 90 mg/l,
   wherein sodium is added in the form of sodium chloride, calcium is added in the form of calcium chloride, magnesium is added in the form of magnesium sulfate, and zinc is added in the form of zinc sulfate, and wherein the amount of bicarbonates in the water matrix does not exceed 10 mg/l; and
b) A protecting package in the form of a bottle, a pouch and/or a container having wall width less than 150 µm.

The proposed composition is specifically conceived to be packaged in a lightweight container having wall width less than 150 µm.

The fact that the drinking water of the water matrix of the zinc enriched drinking water composition comprises partially or totally demineralized drinking water is advantageous in that it allows controlling the level of bicarbonates in the water matrix

In particular, pH of the water matrix of the zinc enriched drinking water composition, at the time it is prepared is between 6.5 and 7.

For instance, in the packaged zinc enriched drinking water composition, sedimentation of zinc is lower than 10% of total soluble zinc contained in the zinc enriched drinking water composition, over a period of 12 months at a maximum ambient temperature of 40°C.

The following description and the drawings illustrate specific embodiments sufficiently to enable those skilled in the art to practice the packaged composition described. Other embodiments may incorporate structural, logical, process and other changes. Examples merely typify possible variations. Individual elements and functions are generally optional unless explicitly required, and the sequence of operations may vary. Portions and features of some embodiments may be included in, or substituted for, those of others.

### Brief description of the Drawings

The invention is further described with reference to the following examples. It will be appreciated that the invention as claimed is not intended to be limited in any way by these examples.

Embodiments of the present invention will now be described, by way of examples, with reference to the accompanying figures in which:
- Figure 1 is a graph presenting a comparison of zinc soluble concentration in water for a standard and a lightweight bottle for the same recipe; and
- Figure 2 is a graph presenting variation of zinc solubility according to pH in a zinc fortified water composition.

### Detailed description

As used in this specification, the words "comprises", "comprising", and similar words, are not to be interpreted in an exclusive or exhaustive sense. In other words, they are intended to mean including, but not limited to.

Any reference to prior art documents in this specification is not to be considered as an admission that such prior art is widely known or forms part of the common general knowledge in the field.

The present embodiments are directed to a packaged zinc enriched drinking water composition.

The analysis of the proposed figures will present the key parameters in the definition and design of a packaged zinc enriched drinking water composition according to the invention.

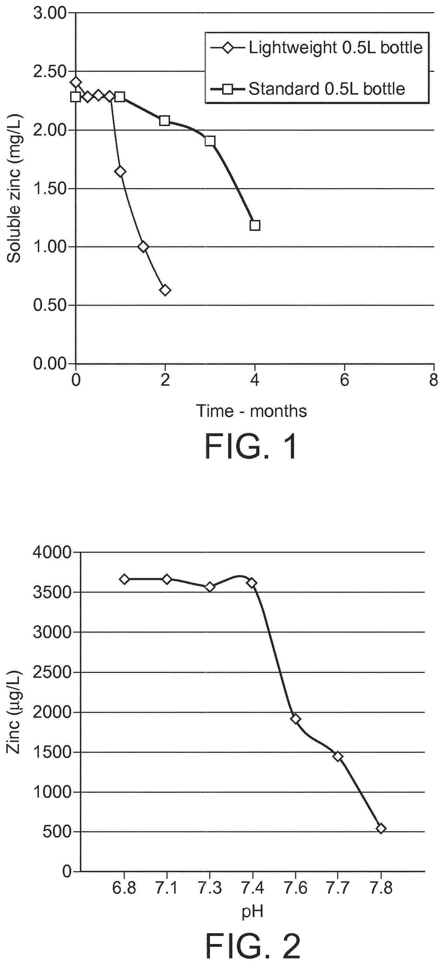

Figure 1 of the accompanied drawings is a graph presenting a comparison of the concentration of soluble zinc (mg/l) in the water for a given recipe stored at 60°C between a standard and a lightweight bottle. The graph clearly shows that for the same recipe, zinc will precipitate earlier in time in a lightweight plastic bottle than in a conventional plastic bottle. This is mainly due to an increase of CO₂ outgassing due to bottle walls being thinner. It is therefore necessary to propose a new zinc enriched drinking water composition allowing increased zinc soluble form stability and compatible with usual conditions and time of storage packaged water. The proposed invention when formulating the composition takes into account the specificities of lightweight plastic bottle so as to lower the outgassing of CO₂.

Figure 2 represents a graph showing variation of zinc solubility according to pH in a zinc fortified water composition. As can be seen from the graph, for a pH below 7.3, zinc remains soluble in the zinc enriched water composition, whereas as soon as pH reaches 7.4, zinc precipitates and soluble zinc in the zinc enriched water composition decrease dramatically. As already mentioned, pH is a key driver for the managing zinc solubility in a zinc enriched water composition. The targeted pH of the water matrix of the zinc enriched drinking water composition should be as low as possible to avoid early zinc precipitation.

The proposed composition takes into account these parameters by avoiding components that will participate to the increase of pH in the composition. Therefore, the zinc enriched drinking water composition of the packaged zinc enriched drinking water composition of the invention proposes to reduce as much as possible the amount of bicarbonates in the water matrix.

This can be achieved by choosing as water base, drinking water having low amount of bicarbonates or demineralized water containing no bicarbonates. As an alternative proposal, drinking water can be partially or totally demineralized drinking water. By low amount of bicarbonates, it is intended an amount of bicarbonates in the water matrix and in the zinc enriched drinking water composition of the packaged zinc enriched drinking water composition of the invention is that is less than 10 mg/l. Addition of bicarbonates within the range of defined low amount (less than 10 mg/l) may in some cases be needed to ensure satisfying taste for the customer.

The proposed limited amount of bicarbonates in the composition of the packaged zinc enriched drinking water composition of the invention is very low in comparison to the amount of bicarbonates in other well-known brands of mineral water:
- Vittel ^{®}: Bicarbonates (HCO3-): 384 mg/l
- Evian ^{®}: Bicarbonates (HCO3-): 360 mg/l

In addition, a low and limited amount of bicarbonates will participate in avoiding zinc to combine with bicarbonates thus leading to insoluble zinc carbonates (ZnCO₃).

The current invention allows having zinc enriched drinking water composition with a mineral content that achieves a unique character that remains consistent with the consumer expectation of zinc enriched water.

The zinc enriched drinking water composition of the packaged zinc enriched drinking water composition of the invention is packed in a lightweight container having wall width less than 150 µm, and is based on a water matrix comprising drinking water to which are added the following minerals:
- calcium in a range from 60 to 90 mg/l;
- magnesium in a range from 23 to 34 mg/l;
- zinc in a range from 2 to 12 mg/l;
- sodium in a range from 60 to 90 mg/l; and
- bicarbonates not exceeding 10 mg/l.

The proposed ranges of minerals are ranges in which the zinc enriched water composition when packed in a lightweight container having wall width less than 150 µm, stands a 8 to 12 months shelf life at ambient temperature, said ambient temperature possibly reaching a temperature up to 60°C.

Optimization of the proposed drinking water composition is made so that specific taste of zinc enriched drinking water composition reaches local consumers' expectations.

The proposed minerals are added using mineral compounds including calcium chloride, magnesium sulfate, zinc sulfate and sodium chloride.

With the proposed amounts of minerals, the pH of the water matrix at the time it is prepared is between 6.5 and 7.

The proposed composition allows the pH to have a limited increase during 12 months after preparation and pH does not exceed 7.5 after 12 months from preparation.

If needed in order to ensure further limited increase of pH during the shelf life of the product (12 months minimum), pH of the water matrix may further be adjusted by acidifying the water matrix. Acidifying of the water matrix is made by adding a given amount of strong acid to the water matrix.

The strong acid is chosen in the list of sulfuric acid and hydrochloric acid.

Preferably, sulfuric acid is added to the water matrix because the added quantities of acid are very small, less than 20 mg/l, and therefore have no effect on the taste of the final water product. Furthermore, the used of sulfuric acid does not lead to the formation of insoluble salts.

The invention is related to a packaged zinc enriched drinking water comprising: a zinc enriched drinking water composition as above presented and a protecting package in the form of a bottle, a pouch and/or a container.

The zinc enriched drinking water composition is packaged in a protecting packaging in order to be stored and/or commercialized. The packagings that are used can be very different according to the needs. Thus, the zinc enriched drinking water composition can be bottled, for example in plastic bottles, for example in PET in the form of conventional bottle and preferably in the form of a PET lightweight bottle, or in any other compatible materials for storing water. The volume of the bottles can vary between 20 cl to 10 I but containers having other volumes can be used.

Preferably the protecting packaging is a lightweight packaging having wall width less than 150 µm.

As an example, for PET bottles, lightweight bottle should be understood as a bottle having reduced PET weight in comparison to conventional PET bottle. The PET weight reduction is at least 5 %. For example, a PET lightweight bottle has a PET weight of 13g for 0.6 l and 27g for 1.5l.

It is also possible to store the zinc enriched drinking water in a pouch or in a container having a more important volumes, for example from 5 to 20 l, according to the use.

The zinc enriched drinking water composition may be produced by a method comprising a step of preparing a water matrix by:
- obtaining a volume of drinking water;
- testing the volume of drinking water to determine the amount of calcium, magnesium, sodium and bicarbonates in the volume;
- adding a mineral packet to the volume of drinking water,

As above mentioned, the method includes the step of obtaining a volume of drinking water. The drinking water is obtained from natural source. The natural source may be a natural spring, well water, artesian water, municipal water, any other source that has levels of minerals lower than the desired levels, or even demineralized water. As the levels of minerals should be lower than the desired levels, the drinking water preferably comprises partially or totally demineralized drinking water.

As a preference, drinking water will mainly contain demineralized water so that the level of bicarbonates is lower than the defined amount of bicarbonates in the zinc enriched water composition.

In a second step, the volume of drinking water is tested for selected mineral content, especially calcium, magnesium, sodium and bicarbonates. This step is not necessary if the volume of water has a known, stable range of minerals. This is especially the case when the drinking water which is used is demineralized water.

In additional embodiments, the mineral content of a water source may be tested from time to time, separate from the particular volume of water to which the mineral packets will be added.

In a further step, mineral packets are obtained or prepared based on the tested mineral content, in accordance with standard manufacturing procedures known in the art of prepackaged mineral ingredients. The mineral packet compositions could be based upon the above mentioned occasional testing instead of on each volume of water.

The mineral content from the tested volume of water may be used to create one or more mineral packets that, when added to the volume of water, will create the desired total mass concentration of each mineral. Alternatively, the mineral packets may be created based on an average or previously tested mineral content of the natural source water.

The mineral packets may be prepared by mixing each of a set of mineral compounds together to form a mixture of minerals. The mineral compounds that may be used are discussed further below. The mineral compounds may be obtained in various forms that allow the minerals to be dissolved into the volume of drinking water. The mineral compounds may be mixed in a pre-ground or granular form or may be ground after mixing and may be provided in liquid form. If the mineral compounds are pre-ground, they may be further ground to make a finer powder mixture. The mineral compounds may be added individually or a few at a time in any viable form until the desired levels of mineral compounds are added.

The mineral packets are created by mixing mineral compounds that will provide the desired minerals to the volume of water. The mineral compounds added are calcium chloride (to provide calcium), magnesium sulfate (to provide magnesium), zinc sulfate (to provide zinc), and sodium chloride (to provide sodium). If needed, bicarbonates are added within the mineral packets with the limitation of having less than 10 mg/l of bicarbonates in the final zinc enriched drinking water composition.

These mineral compounds provide the optimum taste profile for the present embodiments. Other potential mineral compounds could be added, as long as they are selected in amounts that create a light mineral taste, a smooth feel in the mouth, a refreshing taste, and a clean finish without imparting zinc sedimentation in the zinc enriched drinking water composition.

In an optional additional step, the method may comprise a step of acidifying the water matrix in order to adjust the final water product pH to a pH lower than 7.

As a preference, the step of acidifying the water matrix is made by adding a strong acid to the water matrix. The strong acid is preferably chosen in the list of sulfuric acid and hydrochloric acid.

Preferably, sulfuric acid is added to the water matrix because the added quantities of acid are very small, less than 20 mg/l, and therefore have no effect on the taste of the final water product.

## Claims

1. Packaged zinc enriched drinking water composition comprising:
a) A zinc enriched drinking water composition based on a water matrix comprising drinking water and the following set of minerals:
- calcium in a range from 60 to 90 mg/l;
- magnesium in a range from 23 to 34 mg/l;
- zinc in a range from 2 to 12 mg/l; and
- sodium in a range from 60 to 90 mg/l
wherein sodium is added in the form of sodium chloride, calcium is added in the form of calcium chloride, magnesium is added in the form of magnesium sulfate, and zinc is added in the form of zinc sulfate, and wherein the amount of bicarbonates in the water matrix does not exceed 10 mg/l; and
b) A protecting package in the form of a bottle, a pouch and/or a container having wall width less than 150 µm.

2. Packaged zinc enriched drinking water composition according to claim 1, in which is the drinking water of the water matrix of the zinc enriched drinking water composition comprises totally demineralized drinking water.

3. Packaged zinc enriched drinking water composition according to claim 1 or 2, wherein the pH of the water matrix of the zinc enriched drinking water composition, at the time it is prepared is between 6.5 and 7.

4. Packaged zinc enriched drinking water composition according to claim 3, wherein the sedimentation of zinc in the zinc enriched drinking water composition is lower than 10% of total soluble zinc contained in the zinc enriched drinking water composition, over a period of 12 months at a maximum ambient temperature of 40°C.

## Patentansprüche

1. Verpackte zinkangereicherte Trinkwasserzusammensetzung, umfassend:
a) eine zinkangereicherte Trinkwasserzusammensetzung basierend auf einer Wassermatrix, umfassend Trinkwasser und den folgenden Satz von Mineralien:
- Calcium in einem Bereich von 60 bis 90 mg/l;
- Magnesium in einem Bereich von 23 bis 34 mg/l;
- Zink in einem Bereich von 2 bis 12 mg/l; und
- Natrium in einem Bereich von 60 bis 90 mg/l
wobei Natrium in der Form von Natriumchlorid zugegeben wird, Calcium in der Form von Calciumchlorid zugegeben wird, Magnesium in der Form von Magnesiumsulfat zugegeben wird und Zink in der Form von Zinksulfat zugegeben wird, und wobei die Menge von Bicarbonaten in der Wassermatrix 10 mg/l nicht übersteigt; und
b) eine Schutzverpackung in der Form einer Flasche, eines Beutels und/oder eines Behälters, aufweisend eine Wanddicke von weniger als 150 µm.

2. Verpackte zinkangereicherte Trinkwasserzusammensetzung nach Anspruch 1, wobei das Trinkwasser der Wassermatrix der zinkangereicherten Trinkwasserzusammensetzung vollständig demineralisiertes Trinkwasser umfasst.

3. Verpackte zinkangereicherte Trinkwasserzusammensetzung nach Anspruch 1 oder 2, wobei der pH-Wert der Wassermatrix der zinkangereicherten Trinkwasserzusammensetzung zu dem Zeitpunkt ihrer Herstellung zwischen 6,5 und 7 liegt.

4. Verpackte zinkangereicherte Trinkwasserzusammensetzung nach Anspruch 3, wobei die Sedimentation von Zink in der zinkangereicherten Trinkwasserzusammensetzung geringer als 10 % des gesamten löslichen Zinks ist, das in der zinkangereicherten Trinkwasserzusammensetzung enthalten ist, über einen Zeitraum von 12 Monaten bei einer maximalen Umgebungstemperatur von 40 °C.

## Revendications

1. Composition d'eau potable enrichie en zinc conditionnée comprenant :
a) une composition d'eau potable enrichie en zinc à base d'une matrice d'eau comprenant de l'eau potable et l'ensemble de minéraux suivant :
- du calcium dans une plage allant de 60 à 90 mg/L ;
- du magnésium dans une plage allant de 23 à 34 mg/L ;
- du zinc dans une plage allant de 2 à 12 mg/L ; et
- du sodium dans une plage allant de 60 à 90 mg/L
dans laquelle le sodium est ajouté sous forme de chlorure de sodium, le calcium est ajouté sous forme de chlorure de calcium, le magnésium est ajouté sous forme de sulfate de magnésium, et le zinc est ajouté sous forme de sulfate de zinc, et dans laquelle la quantité de bicarbonates dans la matrice d'eau ne dépasse pas 10 mg/L ; et
b) un conditionnement de protection sous forme d'une bouteille, d'un sachet et/ou d'un récipient ayant une largeur de paroi de moins de 150 µm.

2. Composition d'eau potable enrichie en zinc conditionnée selon la revendication 1, dans laquelle se trouve l'eau potable de la matrice d'eau de la composition d'eau potable enrichie en zinc qui comprend de l'eau potable totalement déminéralisée.

3. Composition d'eau potable enrichie en zinc conditionnée selon la revendication 1 ou 2, dans laquelle le pH de la matrice d'eau de la composition d'eau potable enrichie en zinc, au moment où elle est préparée, est entre 6,5 et 7.

4. Composition d'eau potable enrichie en zinc conditionnée selon la revendication 3, dans laquelle la sédimentation du zinc dans la composition d'eau potable enrichie en zinc est inférieure à 10 % du zinc soluble total contenu dans la composition d'eau potable enrichie en zinc, sur une période de 12 mois à une température ambiante maximale de 40 °C.
